# EUROPEAN PATENT APPLICATION

(11) **EP 1 724 107 A1**
(43) Date of publication of application: **22.11.2006**
(21) Application number: 06252611.6
(22) Date of filing: 19.05.2006
(51) Int. Cl.: B32B 27/08, B32B 27/32, B32B 27/34, B32B 29/00, B65D 65/40, B65D 5/40, B65D 5/56

(54) **Gas barrier packaging board**

(30) Priority: 20.05.2005 US 134159
(71) Applicant: WEYERHAEUSER COMPANY, Federal Way, WA 98063-9777 (US)
(72) Inventor: Shearer, Dwayne M., Seattle Washington 98105 (US); Fox, George M., Longview Washington 98632 (US)
(74) Representative: Bayliss, Geoffrey Cyril

(57) **Abstract**

A paperboard structure (12) having a five layer (14-22) product side construction with an aliphatic gas barrier layer which is cost effective.

## Description

The field is packaging board. More specifically it is a packaging board that may be formed into cartons and cups and has gas barrier properties.

The need for a gas barrier in paperboard packages is well known and there have been many solutions to reduce gas transfer through the paperboard. The amount and rate of gas transfer will depend on the type of barrier layer or layers that is used. The gas barrier layer is either laminated, extruded or co-extruded onto the paperboard to provide a board with gas barrier properties.

There are other factors that enter into the choice of a barrier material. Cost is a factor, both in the type and cost of the barrier material being used and also in the amount required to obtain the necessary barrier properties. Other important factors are carton durability, pinholes, and plastic char. Nylon in direct contact with an extruder die lip generates char (pyrolyzed nylon), and this char must be removed periodically to prevent contamination of the board. Char removal requires shutting down the extruder. The amount of barrier material required is also dependent on the uniformity of the barrier layer in both the machine direction and cross machine direction. Poor uniformity yields thick and thin spots which will change the gas barrier level. The type of material will also determine the amount of power required to extrude the material and therefore is a factor in the total cost of the packaging board.

Another factor is the adhesion of the material to the paperboard. Some materials adhere better than others. Some materials, such as nylon, require special board surface treatment to obtain adhesion to the paperboard. This also is reflected in the cost.

There is also the problem of pinholes. Pinholes are small holes in the plastic film that allow liquid contained in the container to contact and penetrate the paperboard. Wet paperboard is very weak and leads to poor durability and reduced shelf life. Pinholes occur when the plastic film is heated in a sealing operation. Heat generates steam in the paperboard and the steam generates bubbles in the plastic structure. Some of the bubbles burst and form pinholes. The number of pinholes can be greatly reduced if the low density polyethylene or linear low density polyethylene or other polyolefin flows into the bubble area thus sealing any pinholes.

Extrusion or co-extrusion is a faster, lower cost process than lamination. The cost of a laminate film and associated handling is also avoided with co-extrusion.

The present invention is directed to a cost effective gas barrier structure which has five product side layers and uses aliphatic nylon as the gas barrier.

This invention provides a paperboard with gas barrier properties comprising
paperboard having a first side and a second side opposite said first side, a first polyolefin layer having a first side and a second side opposite said first side, said first polyolefin first side being applied directly to said second side of said paperboard, a first tie layer having a first side and a second side opposite said first side, said first tie layer first side being applied directly to said second side of said first polyolefin layer, an aliphatic nylon layer having a first side and a second side opposite said first side, said nylon layer first side being applied directly to said second side of said first tie layer second side, a second tie layer having a first side and a second side opposite said first side, said second tie layer first side being applied directly to said second side of said nylon layer, and a second polyolefin layer having a first side and a second side opposite said first side, said first side being applied directly to said tie layer first side.

The following is a description of some specific embodiments of the invention, reference being made to the accompanying drawings in which:

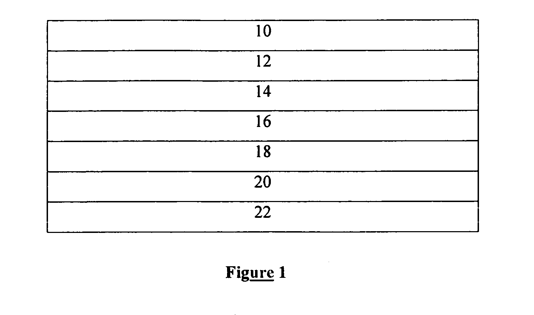

Figure 1 is a cross-sectional view of the board.

The paperboard 12 has a first side and a second side opposite the first side. The paperboard may have a weight of 200 to 500 g/ m².

A polyolefin layer 10 is applied to the outer or first surface of the paperboard 12. A typical outer polyolefin layer 10 is low density polyethylene. Layer 10 provides a good print surface. If improved carton durability is required then linear low density polyethylene, metallocene catalyzed linear low density polyethylene or a blend of low density polyethylene and linear low density polyethylene or metallocene catalyzed linear low density polyethylene may be used. These resins are tougher than low density polyethylene resins. Layer 10 is applied in amounts ranging from 15 to 25 grams per square meter (g/m²).

A polyolefin layer 14 is applied directly to the inner or second surface of the paperboard 12. The polyolefin layer 14 has a first side and a second side opposite the first side. The first side of the layer 14 is applied to the second side of the paperboard 12. The polyolefin layer 14 is usually low density polyethylene. It provides good adhesion to the paperboard without special treatment. Low density polyethylene also eliminates the exposure of the nylon to the die lip during an extrusion or co-extrusion process. Die lip contact leads to char which causes waste and downtime. If improved carton durability is required then linear low density polyethylene, metallocene catalyzed linear low density polyethylene or a blend of low density polyethylene and linear low density polyethylene or metallocene catalyzed linear low density polyethylene may be used. These resins are tougher than low density polyethylene resins. The amount of layer 14_may range from 4 to 25 grams per square meter.

A first tie layer 16 is applied directly to the polyolefin layer 14. The first tie layer has a first side and a second side opposite the first side. The first side of the tie layer 16 is applied directly to the second side of layer 14. The first tie layer 16 may be any appropriate adhesive resin. A typical adhesive resin is a maleic anhydride modified polyethylene resin. The usual amount of tie resin would be 3 to 9 grams per square meter.

The aliphatic nylon gas barrier layer 18 is applied directly to the first tie layer 16. The aliphatic nylon layer 18 has a first side and a second side opposite the first side. The first side of layer 18 is applied directly to the second side of layer 16. Examples of aliphatic nylons that may be used are nylon 6, nylon 66, nylon 6/66, nylon 6/9, nylon 6/10, nylon 11 and nylon 12. The amount of nylon ranges from 5 to 15 grams per square meter. The amount will determine the gas barrier property.

A second tie layer 20 is applied directly to the aliphatic nylon gas barrier layer 18. The second tie layer has a first side and a second side opposite the first side. The first side of the tie layer 20 is applied directly to the second side of layer 18. The second tie layer 20 may be any appropriate adhesive resin. A typical adhesive resin is a maleic anhydride modified polyethylene resin. The usual amount of tie resin would be 3 to 9 grams per square meter.

An inner polyolefin layer 22 is applied directly to the tie layer 20. The inner polyolefin layer has a first side and a second side. The first side of the polyolefin layer 22 is applied directly to the second side of tie layer 20. The inner polyolefin product contact layer 22 is usually low density polyethylene. If higher durability is required then linear low density polyethylene, metallocene catalyzed linear low density polyethylene or a blend of low density polyethylene and linear low density polyethylene or metallocene catalyzed linear low density polyethylene may be used. The amount of polyethylene may range from 12 to 25 grams per square meter.

Pinhole performance is improved significantly in a cost effective manner if layer 22 contains 18 g/m² polyolefin or more and layer 14 contains 5 g/m² or more. Alternatively, pinhole performance is improved significantly in a cost effective manner if layer 14 has 18 g/m² polyolefin or more and layer 22 has 12 g/m² polyolefin or more. Layer 22 has 12 g/m² to assure proper sealing performance during the carton forming process.

One example of a barrier coated paperboard, using Figure 1 as an example, would be a board having a 16 g/m²outer low density polyethylene layer 10 applied to the first side of the paperboard 12. An 11 g/m² low density polyethylene layer 14 is applied directly to the second side of the paperboard 12. The first side of a 5 g/m² Bynel® tie layer 16 is applied directly to the second side of the low density polyethylene layer 14. The first side of a 6 g/m² nylon 6 or 66 layer 18 is applied directly to the second side of the tie layer 16. The first side of a 5 g/m² Bynel® tie layer 20 is applied directly to the second side of the nylon layer 18. The first side of an inner 15 g/m² low density polyethylene product contacting layer 22 is applied directly to the second side of the tie layer 20.

A second example of a barrier coated paperboard, again using Figure 1 as an example, would be a board having a 16 g/m² outer low density polyethylene layer 10 applied directly to the second side of the paperboard 12. The first side of a 16 g/m² low density polyethylene layer 14 is applied directly to the second side of the paperboard 12. The first side of an 8 g/m² Bynel® tie layer 16 is applied directly to the second side of low density polyethylene layer 14. The first side of a 6 g/m² nylon 6 or 66 layer 18 is applied directly to the second side of the tie layer 16. The first side of a 5 g/m² Bynel® tie layer 20 is applied directly to the second side of the nylon layer 18. The first side of an inner 13 g/m² low density polyethylene product contacting layer 22 is applied directly to the second side of the tie layer 20.

A third example of a barrier coated paperboard with improved pinhole performance, again using Figure 1 as an example, would be a board having a 16 g/m² outer low density polyethylene layer 10 applied directly to the first side of the paperboard 12. The first side of a 5 g/m² low density polyethylene layer 14 is applied directly to the second side of the paperboard 12. The first side of a 5 g/m² Bynel® tie layer 16 is applied directly to the first side of the low density polyethylene layer 14. The first side of a 7 g/m² nylon 6 or 66 layer 18 is applied directly to the second side of tie layer 16. The first side of a 5 g/m² Bynel® tie layer 20 is applied directly to the second side of the nylon layer 18. The first side of an inner 24 g/m² low density polyethylene product contacting layer 22 is applied directly to the second side of the tie layer 20.

A fourth example of a barrier coated paperboard with improved pinhole performance, again using Figure 1 as an example, would be a board having a 16 g/m² outer low density polyethylene layer 10 applied directly to the outer surface of the paperboard 12. The first side of an 18 g/m² low density polyethylene layer 14 is applied directly to the second side of the paperboard 12. An 8 g/m² Bynel® tie layer 16 is applied directly to the second side of the low density polyethylene layer 14. The first side of a 7 g/m² nylon 6 or 66 layer 18 is applied directly to the second side of the tie layer 16. The first side of a 5 g/m² Bynel® tie layer 20 is applied directly to the second side of the nylon layer 18. The first side of an inner 13 g/m² low density polyethylene product contacting layer 22 is applied directly to the second side of the tie layer 20.

Although preferred embodiments of the invention have been described using specific terms, such description is for illustrative purposes only. The words used are words of description rather than of limitation. It is to be understood that changes and variations may be made by those of ordinary skill in the art without departing from the spirit or scope of the present invention, which is set forth in the following claims. The spirit and scope of the appended claims should not be limited to the description of the preferred versions contained herein.

## Claims

1. A paperboard with gas barrier properties comprising
paperboard having a first side and a second side opposite said first side,
a first polyolefin layer having a first side and a second side opposite said first side, said first polyolefin first side being applied directly to said second side of said paperboard,
a first tie layer having a first side and a second side opposite said first side, said first tie layer first side being applied directly to said second side of said first polyolefin layer,
an aliphatic nylon layer having a first side and a second side opposite said first side, said nylon layer first side being applied directly to said second side of said first tie layer second side,
a second tie layer having a first side and a second side opposite said first side, said second tie layer first side being applied directly to said second side of said nylon layer, and
a second polyolefin layer having a first side and a second side opposite said first side, said first side being applied directly to said tie layer first side.

2. A paperboard as claimed in claim 1, wherein said first polyolefin layer, said first tie layer, said aliphatic nylon layer, said second tie layer and said second polyolefin layer are co-extruded.

3. A paperboard as claimed in claim 1 or claim 2, wherein said polyolefin layers are low density polyethylene.

4. A paperboard as claimed in any of claims 1 to 3, wherein said aliphatic nylon is at least one of nylon 6, nylon 66, nylon 6/66, nylon 6/9, nylon 6/10, nylon 11 and nylon 12.

5. A paperboard as claimed in any of claims 1 to 4, further comprising a third layer of polyolefin having a first side and a second side, the first side of said polyolefin layer being attached directly to the first side of said paperboard.
